(19) Europäisches Patentamt
European Patent Office
Office européen des brevets

(11) EP 4 621 776 A1

(12) EUROPEAN PATENT APPLICATION

(43) Date of publication:
24.09.2025 Bulletin 2025/39

(21) Application number: 25164697.2

(22) Date of filing: 19.03.2025

(51) International Patent Classification (IPC):
G11B 27/036 (2006.01)

(52) Cooperative Patent Classification (CPC):
G11B 27/036; H04N 21/23418; H04N 21/234363;
H04N 21/8106; H04N 21/854

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 19.03.2024 CN 202410316872

(71) Applicant: BEIJING YOUZHUJU NETWORK
TECHNOLOGY CO. LTD.
Beijing 101299 (CN)

(72) Inventor: LIN, Zeyi
Beijing, 100028 (CN)

(74) Representative: Isarpatent
Patent- und Rechtsanwälte Partg mbB
Friedrichstraße 31
80801 München (DE)

(54) **VIDEO GENERATION METHOD AND APPARATUS, READABLE MEDIUM, AND ELECTRONIC DEVICE**

(57) The present disclosure relates to a video generation method and apparatus, a readable medium, and an electronic device, so as to improve the resolution of a digital human voiceover video and enhance the visual effect of the digital human voiceover video. The video generation method includes: obtaining a talking video of a target object and a target text for video generation; and generating, by using the talking video, the target text, and a video generation model, a target video of a digital human corresponding to the target object talking according to the target text, where the video generation model is configured to generate the target video by: extracting an initial image sequence from the talking video, and down-sampling images in the initial image sequence to obtain a target image sequence, where each of the images in the initial image sequence includes a face of the target object; generating a video frame sequence corresponding to a video of the digital human corresponding to the target object talking according to the target text, according to the target image sequence and an audio sequence corresponding to the target text; and up-sampling video frames in the video frame sequence to obtain the target video.

FIG. 1

**Description**

CROSS-REFERENCE TO RELATED APPLICATION

The present application claims priority of the Chinese Patent Application No. 202410316872.2, filed March 19, 2024, the disclosure of which is incorporated herein by reference in its entirety as part of the present application.

TECHNICAL FIELD

The present disclosure relates to the field of computer technology, and in particular, to a video generation method and apparatus, a readable medium, and an electronic device.

BACKGROUND

With the rapid development of science and technology, content can be expressed by constructing digital humans, thereby improving the diversity of content expression and meeting the requirements of related application scenarios.
The wav2lip model is a speech-to-lip conversion model based on a generative adversarial network, which can make good use of speech for lip driving, so that a digital human voiceover video can be generated through the wav2lip model. However, the output of the wav2lip model is a low-resolution blurred image, and therefore the finally generated digital human voiceover video has poor visual effect.

SUMMARY

This Summary is provided to introduce concepts in a simplified form that are described in detail in the following Detailed Description section. This Summary section is not intended to identify key features or essential features of the claimed technical solution, nor is it intended to be used to limit the scope of the claimed technical solution.
In a first aspect, the present disclosure provides a video generation method, the video generation method including:

obtaining a talking video of a target object and a target text for video generation; and
generating, by using the talking video, the target text, and a video generation model, a target video of a digital human corresponding to the target object talking according to the target text, where the video generation model is configured to generate the target video by:
extracting an initial image sequence from the talking video, and down-sampling images in the initial image sequence to obtain a target image sequence, where each of the images in the initial image sequence includes a face of the target object;
generating a video frame sequence corresponding to a video of the digital human corresponding to the target object talking according to the target text, according to the target image sequence and an audio sequence corresponding to the target text; and
up-sampling video frames in the video frame sequence to obtain the target video.

In a second aspect, the present disclosure provides a video generation apparatus, the video generation apparatus including:

an obtaining module, configured to obtain a talking video of a target object and a target text for video generation; and
a generation module, configured to generate, by using the talking video, the target text, and a video generation model, a target video of a digital human corresponding to the target object talking according to the target text, where the video generation model is configured to generate the target video by the following:
extracting an initial image sequence from the talking video, and down-sampling images in the initial image sequence to obtain a target image sequence, where each of the images in the initial image sequence includes a face of the target object;
generating a video frame sequence corresponding to a video of the digital human corresponding to the target object talking according to the target text, according to the target image sequence and an audio sequence corresponding to the target text; and
up-sampling video frames in the video frame sequence to obtain the target video.

In a third aspect, the present disclosure provides a computer-readable medium having a computer program stored thereon, where when the program is executed by a processing apparatus, the steps of the method according to any one of the first aspect are implemented.

In a fourth aspect, the present disclosure provides an electronic device, including:

a storage apparatus having a computer program stored thereon; and
a processing apparatus configured to execute the computer program in the storage apparatus, to implement the steps of the method according to any one of the first aspect.

In a fifth aspect, the present disclosure provides a computer program product including a computer program, where when the computer program is executed by a processor, the steps of the method according to any one of the first aspect are implemented.

With the above technical solutions, the talking video of the target object and the target text for video generation are obtained, and the target video of the digital human corresponding to the target object talking according to the target text is generated by using the talking video, the target text, and the video generation model, that is, a digital human voiceover video can be generated. The video generation model can down-sample an input image and up-sample a video frame in a generated video frame sequence to obtain the target video. In this manner, a high-resolution image can be processed and a high-resolution digital human voiceover video can be generated by using the video generation model without adding another image processing model, so that the resolution of the digital human voiceover video is improved while the generation efficiency of the digital human voiceover video is ensured, thereby enhancing the visual effect of the digital human voiceover video.

Other features and advantages of the present disclosure will be described in detail in the following detailed description section.

BRIEF DESCRIPTION OF DRAWINGS

The above and other features, advantages and aspects of various embodiments of the present disclosure will become more apparent when taken in conjunction with the drawings and with reference to the following detailed description. Throughout the drawings, the same or similar reference numerals refer to the same or similar elements. It should be understood that the drawings are schematic and that the components and elements are not necessarily drawn to scale. In the drawings:

FIG. 1 is a schematic flowchart of a video generation method according to an exemplary embodiment of the present disclosure;
FIG. 2 is a schematic diagram of training a video generation model according to an exemplary embodiment of the present disclosure;
FIG. 3 is a schematic diagram of an image processing procedure according to an exemplary embodiment of the present disclosure;
FIG. 4 is a block diagram of a video generation apparatus according to an exemplary embodiment of the present disclosure; and
FIG. 5 is a block diagram of an electronic device according to an exemplary embodiment of the present disclosure.

DETAILED DESCRIPTION

Embodiments of the present disclosure will be described in more detail below with reference to the drawings. Although some embodiments of the present disclosure are shown in the drawings, it should be understood that the present disclosure may be implemented in various forms and should not be construed as being limited to the embodiments set forth herein. On the contrary, these embodiments are provided for a more thorough and complete understanding of the present disclosure. It should be understood that the drawings and the embodiments of the present disclosure are only for exemplary purposes, and are not intended to limit the scope of the present disclosure.

It should be understood that the various steps described in the method implementations of the present disclosure may be performed in different orders and/or in parallel. Furthermore, the method implementations may include additional steps and/or omit performing the illustrated steps. The scope of the present disclosure is not limited in this respect.

The term "include/include" and its variants used herein are open-ended inclusions, i.e., "include/include but not limited to". The term "based on" is "at least partially based on". The term "one embodiment" means "at least one embodiment"; the term "another embodiment" means "at least one further embodiment"; and the term "some embodiments" means "at least some embodiments". Relevant definitions of other terms will be given in the description below.

It should be noted that concepts such as "first" and "second" mentioned in the present disclosure are only used to distinguish different apparatuses, modules or units, and are not used to limit the order or interdependence of functions performed by these apparatuses, modules or units.

It should be noted that the modifiers "one" and "a plurality of" mentioned in the present disclosure are illustrative rather than restrictive, and those skilled in the art should understand that they should be understood as "one or more" unless the context clearly indicates otherwise.

The names of messages or information exchanged between apparatuses in the implementations of the present disclosure are only for illustrative purposes, and are not used to limit the scope of the messages or information.

It can be understood that before using the technical solutions disclosed in the embodiments of the present disclosure, the user should be informed of the type, scope of use, usage scenarios, etc. of the personal information involved in the present disclosure in an appropriate manner according to relevant laws and regulations, and the user's authorization should be obtained.

For example, when an active request from a user is received, prompt information is sent to the user, to explicitly prompt the user that the operation requested to be performed will require the acquisition and use of the user's personal information. In this way, the user can independently choose whether to provide the personal information to the software or hardware, such as an electronic device, an application, a server or a storage medium, that performs the operation of the technical solution of the present disclosure, according to the prompt information.

As an optional but non-limiting implementation, the manner of sending the prompt information to the user in response to the receipt of the user's active request may be, for example, a pop-up window, and the prompt information may be presented in text in the pop-up window. In addition, the pop-up window may also carry a selection control for the user to select "agree" or "disagree" to provide the personal information to the electronic device.

It can be understood that the above process of notifying and obtaining the user's authorization is only illustrative, and does not constitute a limitation on the implementations of the present disclosure. Other manners that meet relevant laws and regulations may also be applied to the implementations of the present disclosure.

In addition, it can be understood that the data involved in the technical solution (including but not limited to the data itself, the acquisition or use of the data) should comply with the requirements of corresponding laws, regulations and related provisions.

In the related art, the method for driving the lip shape of a digital human by speech is divided into a 2D image-based method and a 3D model-based method. For example, the lip shape driving of a digital human can be implemented by a wav2lip model. The processing procedure of the wav2lip model is as follows: firstly, an audio sequence is converted into a spectrogram, then a video is converted into a picture sequence, and a human face in each frame of image is detected by using human face detection, and then each human face is deformed into a size of 96x96 and a fragment corresponding to the spectrogram is input into a network. During training, each generated face is supervised and trained by using a real face with a size of 96x96 corresponding to the audio, and in practical application, a human face video and an audio are directly input into the model to obtain a digital human talking video.

Although the wav2lip model can make good use of speech to drive the lip shape, both the input and output of the wav2lip model are low-resolution blurred images, such as images with a size of 96x96, while at present, for a 1080P video, the size of a human face is basically 256x256 or more, which easily leads to poor visual effect of the video. In the related art, although a super-resolution model such as codeformer can be used to perform super-resolution on an image generated by the wav2lip model, the speed of the super-resolution model is slow and the efficiency of video generation is low, which cannot meet the requirements of a scenario with high real-time requirements, such as a live streaming scenario of a digital human.

In view of this, the present disclosure provides a video generation method and apparatus, a readable medium, and an electronic device, to solve the above technical problems.

The embodiments of the present disclosure are further described below with reference to the drawings.

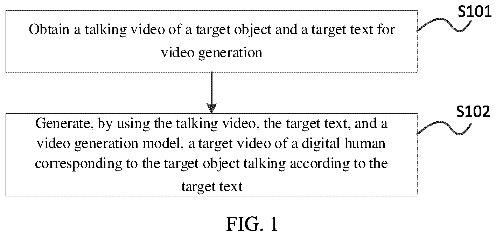

FIG. 1 is a flowchart of a video generation method according to an exemplary embodiment of the present disclosure. Referring to FIG. 1, the video generation method includes the following steps.

S101: Obtain a talking video of a target object and a target text for video generation.

S102: Generate, by using the talking video, the target text, and a video generation model, a target video of a digital human corresponding to the target object talking according to the target text.

The video generation model is configured to generate the target video by the following: extracting an initial image sequence from the talking video, and down-sampling images in the initial image sequence to obtain a target image sequence, where each of the images in the initial image sequence includes a face of the target object; generating a video frame sequence corresponding to a video of the digital human corresponding to the target object talking according to the target text, according to the target image sequence and an audio sequence corresponding to the target text; and up-sampling video frames in the video frame sequence to obtain the target video.

With the above method, the talking video of the target object and the target text for video generation are first obtained, and then the target video of the digital human corresponding to the target object talking according to the target text is generated by using the talking video, the target text, and the video generation model, that is, a digital human voiceover video may be generated. The video generation model may down-sample an input image and up-sample a video frame in a generated video frame sequence to obtain the target video. In this manner, a high-resolution image can be processed and a high-resolution digital human voiceover video can be generated by using the video generation model without adding another image processing model, so that the resolution of the digital human voiceover video is improved while the generation efficiency of the digital human voiceover video is ensured, thereby enhancing the visual effect of the digital human voiceover video.

In a possible implementation, the obtaining the target text for video generation may include: obtaining a live streaming content text for live streaming video generation. The generating, by using the talking video, the target text, and the video generation model, the target video of the digital human corresponding to the target object talking according to the target text may include: generating, by using the talking video, the live streaming content text, and the video generation model, a target live streaming video of the digital human corresponding to the target object talking according to the live streaming content text.

It should be understood that in the video generation process of the video generation model in the embodiments of the present disclosure, no image processing model such as a super-resolution model is added, and the video generation efficiency is high, which can meet the real-time requirements in a live streaming scenario. Therefore, the video generation method provided in the embodiments of the present disclosure can be applied to a digital human live streaming scenario. First, the live streaming content text for live streaming video generation may be obtained, and then the target live streaming video of the digital human corresponding to the target object talking according to the live streaming content text, that is, the digital human live streaming video, may be generated by using the talking video, the live streaming content text, and the video generation model.

The live streaming content text required for the live streaming of the digital human may be generated in real time by using a text generation model such as a large language model first, and then the real-time generated live streaming content text is obtained and input into the video generation model to generate the target live streaming video. Alternatively, all the live streaming content texts required in the live streaming process of the digital human may be obtained first, and then all the live streaming content texts are input into the video generation model to obtain the target live streaming video, which is not limited in the embodiment of the present disclosure.

The structure and training process of the video generation model are described below with embodiments. The video generation model may be a constructed neural network model, or an improvement on the basis of the wav2lip model, so that the purpose of improving the resolution of the digital human voiceover video can be realized without adding another image processing model.

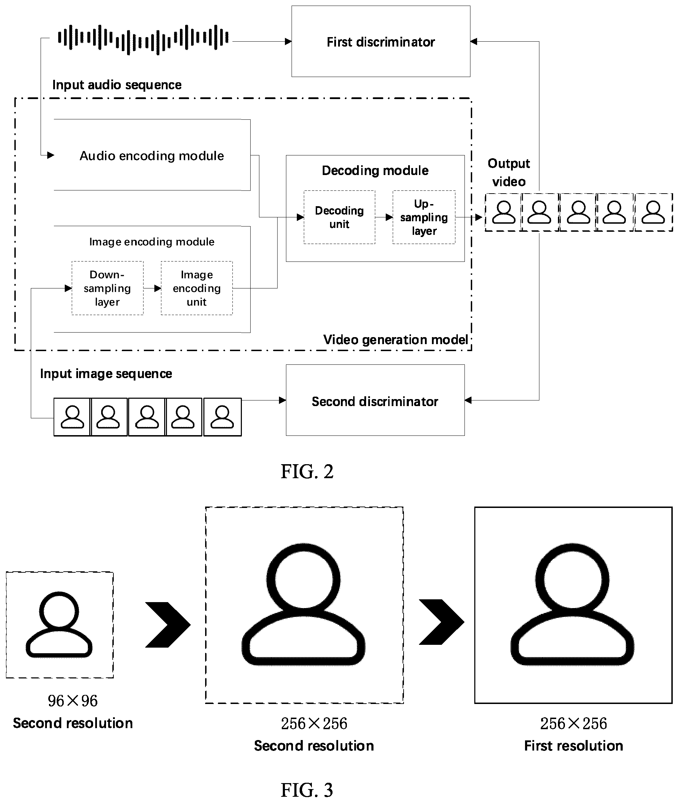

Referring to FIG. 2, an original wav2lip model consists of two encoding modules and a generator (decoding module). In the present disclosure, a down-sampling layer is added to the image encoding module, and an image encoding unit performs the processing procedure of an original image encoding module. An up-sampling layer is added to the decoding module, and a decoding unit performs the processing procedure of an original decoding module.

In a possible implementation, the video generation model is trained by the following: obtaining a sample talking video of a target sample object, and extracting a sample audio sequence and a sample image sequence from the sample talking video, where images in the sample image sequence have a second resolution; processing the resolution of the images in the sample image sequence to a first resolution to obtain a first sample image sequence, and processing the first sample image sequence by using a super-resolution model to obtain a second sample image sequence, where the first resolution is higher than the second resolution; and performing model training on the video generation model according to the sample audio sequence and the second sample image sequence to obtain a trained video generation model.

For example, a sample talking video of a target sample object may be obtained, where the target sample object includes but is not limited to a real person object, a virtual person object, a cartoon person object, and the like. A sample audio sequence and a sample image sequence are extracted from the sample talking video. In response to the images in the sample image sequence being low-resolution images, the images are scaled up and processed through super-resolution to obtain high-resolution images. Referring to FIG. 3, for example, when the images extracted from a 360P video have a size of 96x96, the images are scaled up to a size of 256x256, and the super-resolution model is used to perform super-resolution processing, so as to obtain high-resolution images, such as images with a resolution of 1080P, thereby enabling the training of the video generation model by using the low-resolution sample image sequence. In response to the images in the sample image sequence being high-resolution images, no processing is required.

Further, since the original wav2lip model processes low-resolution images, but the video generation model provided by the present disclosure requires high-resolution images to be input, the images with the first resolution may be down-sampled by using the down-sampling layer to obtain images with the second resolution, and then a subsequent model processing procedure is performed. Before the model outputs, the generated images with the second resolution are up-sampled by using the up-sampling layer to obtain the generated images with the first resolution, and then the high-resolution video frames are output.

In this manner, the video generation model is trained by using the high-resolution sample images, so that the video generation model has the capability of processing and generating high-resolution images. Therefore, in the model application process, the high-resolution digital human voiceover video may be obtained without using the super-resolution model, and the resolution of the digital human voiceover video is improved and the generation efficiency of the digital human voiceover video is also improved, so that the method can be applied to a scenario with high real-time requirements, such as a live streaming scenario.

It should be noted that the lip shape changes between adjacent images output by the original wav2lip model are too fast, and there is a disadvantage of image lip jitter.

In a possible implementation, the performing model training on the video generation model according to the sample audio sequence and the second sample image sequence to obtain a trained video generation model may include: for each sample image in the second sample image sequence, determining a previous sample image of the sample image and a next sample image of the sample image in the second sample image sequence; obtaining, by using the sample audio sequence, the sample image, the previous sample image, the next sample image, and the video generation model, a target sample image corresponding to the sample image, a previous target sample image corresponding to the previous sample image, and a next target sample image corresponding to the next sample image; determining an image jitter loss according to the target sample image, the previous target sample image, and the next target sample image; and adjusting a model parameter of the video generation model based on at least the image jitter loss to obtain the trained video generation model.

It should be noted that, referring to FIG. 2, in the training process of the original wav2lip model, the generated video frame will be input into the first discriminator and the second discriminator. The first discriminator is a pre-trained discriminator for lip shape and audio synchronization, which aims to enhance the capability of lip shape and audio synchronization discrimination. It may accept an audio sequence and the generated video frame as input to discriminate whether the lip shape and the audio in the generated video frame are synchronous. The second discriminator is a visual quality discriminator of lip shape, which receives the generated video frame and the input image sequence of the model to discriminate its authenticity so as to drive better generation of lip shape quality. Therefore, the first loss may be obtained through the first discriminator, and the second loss may be obtained through the second discriminator.

It should be noted that the original wav2lip model inputs a single picture and outputs a single picture, and the model may not perceive the timing information, and therefore may not consider the consistency between frames. On this basis, the present disclosure inputs the previous frame of the current frame image and the next frame of the current frame image, so that the temporal features of the previous and the next images may be extracted, and then three frames of images are output, the image jitter loss between images is calculated, the video generation model is adjusted in combination with the first loss and the second loss, and then the training is continued until a preset training completion condition is reached. The preset training completion condition may be set according to requirements, and the present disclosure does not limit this.

For example, the first frame of the sample image sequence has no previous frame, and the last frame of the sample image sequence has no next frame. However, since the first frame and the last frame are usually video frames without talking, the requirement for timing information is relatively low, and therefore the first frame and the last frame may be input as a single frame, or may be input as two frames, such as the first frame and the next frame, or the first frame may be replicated and the first frame, the first frame and the next frame are input, etc., which is not limited in the present disclosure.

For example, for a middle frame of the sample image sequence, the current frame, the previous frame, and the next frame may be input into the image encoding module, and feature fusion encoding is performed on the current frame, the previous frame, and the next frame to obtain a current feature image corresponding to the current frame, a previous feature image corresponding to the previous frame, and a next feature image corresponding to the next frame. A fragment corresponding to the current frame, the previous frame, and the next frame in the sample audio sequence is feature encoded to obtain an audio feature. Further, the audio feature, the current feature image, the previous feature image, and the next feature image are decoded by the decoding module to generate a first image corresponding to the current frame, a second image corresponding to the previous frame, and a third image corresponding to the next frame.

Further, the first images corresponding to all sample images in the sample image sequence are used as an image sequence generated by the model, the generated image sequence and the sample audio sequence are discriminated by the first discriminator to obtain the first loss, and the generated image sequence and the sample image sequence are discriminated by the second discriminator to obtain the second loss. The image jitter loss is calculated according to the first images corresponding to all sample images in the sample image sequence, the second images corresponding to the previous frames of all sample images, and the third images corresponding to the next frames of all sample images, and then the parameters of the video generation model are adjusted in combination with the first loss, the second loss, and the image jitter loss, and then the training is continued until the preset training completion condition is reached.

It should be noted that the Jitter loss can reduce the abrupt motion or jitter of the output of the model, and the objective is to minimize the differences between consecutive outputs in a sequence, thereby reducing the output unsmoothness or jitter. When the average rate of change of the three-frame output is considered to be minimized, an optical flow or any feature representing smoothness may be used. The calculation formula of the specific Jitter loss may vary with different specific applications. Assuming that there are three consecutive outputs of F (T-1), F (T) and F (T-1), the Jitter loss may be calculated by the following calculation formula:

$$\text{Jitter loss} = |F(T+1) - F(T)| - |F(T) - F(T-1)|$$

Exemplarily, the above calculation formula calculates the average rate of change of the current frame and the adjacent frames based on the Manhattan distance, or the Euclidean distance may be used, etc., which may be adjusted according to requirements, and the present disclosure does not limit this.

Since the Jitter loss is introduced in the model training process, the inter-frame lip jitter of the output image sequence can be reduced, thereby solving the problem of lip jitter between consecutive frames of the video.

The application process of the video generation model is described below with embodiments.

Exemplarily, an initial image sequence and an audio file may be extracted based on the talking video of the target object, a timbre feature may be extracted from the audio file, an audio sequence may be generated based on the timbre feature, the text content and an audio generation model. The initial image sequence and the audio sequence are input into the video generation model, so that the video generation model generates the image of the digital human according to the image of the target object, and obtains the audio corresponding to the text content according to the timbre of the audio file. Of course, a separate audio file may also be provided to extract the timbre feature in the audio file, which may be set according to requirements, and the present disclosure does not limit this. In addition to the digital human, a cartoon character may also be generated, etc., which is not limited in the present disclosure.

In a possible implementation, the images in the initial image sequence have a first resolution, and the down-sampling the images in the initial image sequence to obtain the target image sequence may include: down-sampling the images in the initial image sequence to obtain the target image sequence having a second resolution, where the first resolution is higher than the second resolution; and the up-sampling the video frames in the video frame sequence to obtain the target video may include: up-sampling the video frames in the video frame sequence to obtain the target video having the first resolution.

Exemplarily, the original wav2lip model has the capability of processing and generating low-resolution images. Based on the original wav2lip model, the input high-resolution image is down-sampled to obtain a low-resolution image, then the low-resolution image is processed, and the generated image is up-sampled to obtain a high-resolution image before the image is output, so as to obtain a high-resolution video. In this manner, on the basis of not changing the original image processing logic of the video generation model, the high-resolution digital human voiceover video can be generated, and the resolution of the digital human voiceover video is improved while the generation efficiency of the digital human voiceover video is ensured.

In a possible implementation, the generating the video frame sequence corresponding to the video of the digital human corresponding to the target object talking according to the target text, according to the target image sequence and the audio sequence corresponding to the target text may include: for each image in the target image sequence, determining a previous image of the image and a next image of the image in the target image sequence, and performing feature fusion on the image, the previous image, and the next image to obtain an image fusion feature; and generating the video frame sequence corresponding to the video of the digital human corresponding to the target object talking according to the target text, according to image fusion features of all the images in the target image sequence and the audio sequence corresponding to the target text.

Exemplarily, similar to the model training process, by simultaneously inputting the current frame image and the previous and the next frame images, the temporal information between the image frames can be extracted, thereby reducing the inter-frame lip jitter of the output image sequence, and solving the problem of lip jitter between consecutive frames of the video.

In a possible implementation, the image fusion feature includes a first fusion feature corresponding to the image, a second fusion feature corresponding to the previous image, and a third fusion feature corresponding to the next image; and the generating the video frame sequence corresponding to the video of the digital human corresponding to the target object talking according to the target text, according to the image fusion features of all the images in the target image sequence and the audio sequence corresponding to the target text may include: for the image fusion feature of each image in the target image sequence, according to the image fusion feature and the audio sequence, generating a first video frame corresponding to the first fusion feature, a second video frame corresponding to the second fusion feature, and a third video frame corresponding to the third fusion feature; and obtaining the video frame sequence according to the first video frames of all the images in the target image sequence.

Exemplarily, the fused image features of the current frame image and the previous and the next frame images are extracted, and the fused image features and the audio feature obtained from the audio sequence are input into the encoding module to obtain the first video frame corresponding to the first fusion feature, the second video frame corresponding to the second fusion feature, and the third video frame corresponding to the third fusion feature. The first video frames of all the images in the target image sequence are sequentially spliced to obtain the video frame sequence. Since each image in the video frame sequence is fused with the temporal information of the previous and the next frames, the inter-frame lip jitter of the output image sequence can be reduced, thereby solving the problem of lip jitter between consecutive frames of the video.

In a possible implementation, the video generation model includes an audio encoding module, an image encoding module and a decoding module. The image encoding module includes a down-sampling layer and an image encoding unit, the decoding module includes a decoding unit and an up-sampling layer, and the video generation model is configured to generate the target video by the following: extracting an initial image sequence from the talking video, and down-sampling the images in the initial image sequence by using the down-sampling layer to obtain the target image sequence; performing feature encoding on the target image sequence by using the image encoding unit to obtain an image feature, and performing feature encoding on the audio sequence by using the audio encoding module to obtain an audio feature; inputting the image feature and the audio feature into the decoding unit to generate the video frame sequence corresponding to the video of the digital human corresponding to the target object talking according to the target text; and up-sampling the video frames in the video frame sequence by using the up-sampling layer to obtain the target video.

Exemplarily, referring to FIG. 2, the initial image sequence is extracted from the talking video, and the initial image sequence is input into the down-sampling layer for down-sampling to obtain the target image sequence. The target image sequence is encoded by the image encoding unit to obtain the image feature. The audio sequence is input into the audio encoding module for encoding to obtain the audio feature. The audio feature and the image feature are input into the decoding unit to generate the video frame sequence corresponding to the video of the digital human corresponding to the target object talking according to the target text. The video frame sequence is up-sampled based on the up-sampling layer to obtain the target video.

In this way, in the digital human voiceover scenario, a high-resolution image can be processed and a high-resolution digital human voiceover video can be generated by using the video generation model without adding another image processing model, so that the resolution of the digital human voiceover video is improved while the generation efficiency of the digital human voiceover video is ensured, thereby enhancing the visual effect of the digital human voiceover.

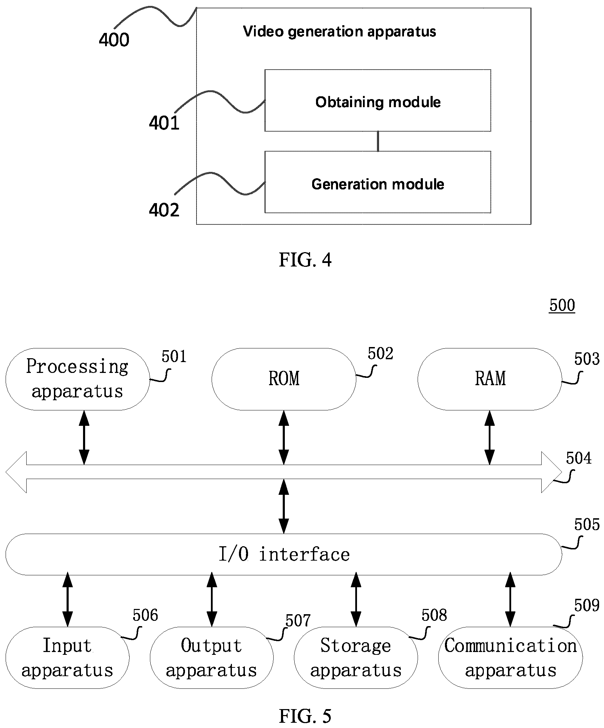

Based on the same inventive concept, the present disclosure further provides a video generation apparatus. Referring to FIG. 4, the video generation apparatus 400 includes:

an obtaining module 401, configured to obtain a talking video of a target object and a target text for video generation; and

a generation module 402, configured to generate, by using the talking video, the target text, and a video generation model, a target video of a digital human corresponding to the target object talking according to the target text, where the video generation model is configured to generate the target video by the following:
extracting an initial image sequence from the talking video, and down-sampling images in the initial image sequence to obtain a target image sequence, where each of the images in the initial image sequence includes a face of the target object;
generating a video frame sequence corresponding to a video of the digital human corresponding to the target object talking according to the target text, according to the target image sequence and an audio sequence corresponding to the target text; and
up-sampling video frames in the video frame sequence to obtain the target video.

With the above apparatus, the talking video of the target object and the target text for video generation are first obtained, and then the target video of the digital human corresponding to the target object talking according to the target text is generated by using the talking video, the target text, and the video generation model, that is, a digital human voiceover video may be generated. The video generation model may down-sample an input image and up-sample a video frame in a generated video frame sequence to obtain the target video. In this manner, a high-resolution image can be processed and a high-resolution digital human voiceover video can be generated by using the video generation model without adding another image processing model, so that the resolution of the digital human voiceover video is improved while the generation efficiency of the digital human voiceover video is ensured, thereby enhancing the visual effect of the digital human voiceover video.

Optionally, the images in the initial image sequence have a first resolution, and the generation module 402 is configured to:

down-sample the images in the initial image sequence to obtain the target image sequence having a second resolution, where the first resolution is higher than the second resolution; and
the up-sampling the video frames in the video frame sequence to obtain the target video includes:
up-sampling the video frames in the video frame sequence to obtain the target video having the first resolution.

Optionally, the generation module 402 includes:

a fusion module, configured to, for each image in the target image sequence, determine a previous image of the image and a next image of the image in the target image sequence, and perform feature fusion on the image, the previous image, and the next image to obtain an image fusion feature; and

a generation sub-module, configured to generate the video frame sequence corresponding to the video of the digital human corresponding to the target object talking according to the target text, according to image fusion features of all images in the target image sequence and the audio sequence corresponding to the target text.

Optionally, the image fusion feature includes a first fusion feature corresponding to the image, a second fusion feature corresponding to the previous image, and a third fusion feature corresponding to the next image; and

the generation sub-module is configured to:

for the image fusion feature of each image in the target image sequence, according to the image fusion feature and the audio sequence, generate a first video frame corresponding to the first fusion feature, a second video frame corresponding to the second fusion feature, and a third video frame corresponding to the third fusion feature; and obtain the video frame sequence according to the first video frames of all the images in the target image sequence.

Optionally, the video generation model includes an audio encoding module, an image encoding module and a decoding module, the image encoding module includes a down-sampling layer and an image encoding unit, the decoding module includes a decoding unit and an up-sampling layer, and the generation module 402 is configured to:

extract the initial image sequence from the talking video, and down-sample the images in the initial image sequence by using the down-sampling layer to obtain the target image sequence;

perform feature encoding on the target image sequence by using the image encoding unit to obtain an image feature, and perform feature encoding on the audio sequence by using the audio encoding module to obtain an audio feature;

input the image feature and the audio feature into the decoding unit to generate the video frame sequence corresponding to the video of the digital human corresponding to the target object talking according to the target text; and

up-sample the video frames in the video frame sequence by using the up-sampling layer to obtain the target video.

Optionally, the video generation apparatus 400 includes a model training module, and the model training module includes:

an extraction module, configured to obtain a sample talking video of a target sample object, and extract a sample audio sequence and a sample image sequence from the sample talking video, where images in the sample image sequence have a second resolution;

a super-resolution module, configured to process the resolution of the images in the sample image sequence to a first resolution to obtain a first sample image sequence, and process the first sample image sequence by using a super-resolution model to obtain a second sample image sequence, where the first resolution is higher than the second resolution; and

a training module, configured to perform model training on the video generation model according to the sample audio sequence and the second sample image sequence to obtain a trained video generation model.

Optionally, the training module is configured to:

for each sample image in the second sample image sequence, determine a previous sample image of the sample image and a next sample image of the sample image in the second sample image sequence;

obtain, by using the sample audio sequence, the sample image, the previous sample image, the next sample image, and the video generation model, a target sample image corresponding to the sample image, a previous target sample image corresponding to the previous sample image, and a next target sample image corresponding to the next sample image;

determine an image jitter loss according to the target sample image, the previous target sample image, and the next target sample image; and

adjust a model parameter of the video generation model based on at least the image jitter loss to obtain the trained video generation model.

Optionally, the obtaining module 401 is configured to:
obtain a live streaming content text for live streaming video generation.
Optionally, the generation module 402 is configured to:

generate, by using the talking video, the live streaming content text, and the video generation model, a target live streaming video of the digital human corresponding to the target object talking according to the live streaming content text.

For the apparatus in the above embodiment, the specific manner in which each module performs the operation has been described in detail in the embodiments related to the method, and will not be elaborated here.

Based on the same concept, an embodiment of the present disclosure further provides a computer-readable medium having a computer program stored thereon, where when the program is executed by a processing apparatus, the steps of the above video generation method are implemented.

Based on the same concept, an embodiment of the present disclosure further provides an electronic device, including:

a storage apparatus having a computer program stored thereon; and
a processing apparatus configured to execute the computer program in the storage apparatus, to implement the steps of the above video generation method.

Based on the same concept, an embodiment of the present disclosure further provides a computer program product including a computer program, where when the computer program is executed by a processor, the steps of the above video generation method are implemented.

Reference is made to FIG. 5 below, which illustrates a schematic structural diagram of an electronic device 500 suitable for implementing an embodiment of the present disclosure. The electronic device in the embodiment of the present disclosure may include, but is not limited to, mobile terminals such as a mobile phone, a notebook computer, a digital broadcast receiver, a PDA (Personal Digital Assistant), a PAD (tablet computer), a PMP (Portable Multimedia Player), a vehicle-mounted terminal (such as a vehicle navigation terminal), and fixed terminals such as a digital TV, a desktop computer, and the like. The electronic device shown in FIG. 5 is only one example, and should not bring any limitation to the function and usage scope of the embodiments of the present disclosure.

As shown in FIG. 5, the electronic device 500 may include a processing apparatus (e.g., a central processing unit, a graphics processing unit, etc.) 501 that may perform various appropriate actions and processes according to a program stored in a read-only memory (ROM) 502 or a program loaded from a storage apparatus 508 into a random-access memory (RAM) 503. The RAM 503 further stores various programs and data required for the operation of the electronic device 500. The processing apparatus 501, the ROM 502, and the RAM 503 are connected to each other through a bus 504. An input/output (I/O) interface 505 is also connected to the bus 504.

Generally, the following apparatuses may be connected to the I/O interface 505: an input apparatus 506 including, for example, a touchscreen, a touchpad, a keyboard, a mouse, a camera, a microphone, an accelerometer, a gyroscope, or the like; an output apparatus 507 including, for example, a liquid crystal display (LCD), a speaker, a vibrator, or the like; a storage apparatus 508 including, for example, a magnetic tape, a hard disk, or the like; and a communication apparatus 509. The communication apparatus 509 may allow the electronic device 500 to perform wireless or wired communication with other devices to exchange data. Although FIG. 5 shows the electronic device 500 having various apparatuses, it should be understood that it is not required to implement or have all of the illustrated apparatuses. More or fewer apparatuses may alternatively be implemented or provided.

In particular, according to an embodiment of the present disclosure, the process described above with reference to the flowchart can be implemented as a computer software program. For example, an embodiment of the present disclosure includes a computer program product, which includes a computer program carried on a non-transitory computer-readable medium, where the computer program includes program codes for executing the method shown in the flowchart. In such an embodiment, the computer program can be downloaded and installed from a network through the communication apparatus 509, or installed from the storage apparatus 508, or installed from the ROM 502. When the computer program is executed by the processing apparatus 501, the above functions defined in the method of the embodiments of the present disclosure are executed.

It should be noted that the above computer-readable medium in the present disclosure may be a computer-readable signal medium or a computer-readable storage medium or any combination thereof. The computer-readable storage medium may be, for example, but not limited to, an electrical, magnetic, optical, electromagnetic, infrared, or semiconductor system, apparatus or device, or any combination thereof. More specific examples of the computer-readable storage medium may include, but are not limited to: an electrical connection with one or more wires, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, the computer-readable storage medium may be any tangible medium that contains or stores a program that can be used by or in combination with an instruction execution system, apparatus, or device. In the present disclosure, the computer-readable signal medium may include a data signal that propagates in a baseband or as part of a carrier wave, and computer-readable program codes are carried therein. The data signal propagating in this manner may take a variety of forms, including but not limited to an electromagnetic signal, an optical signal, or any suitable combination thereof. The computer-readable signal medium may also be any computer-readable medium other than the computer-readable storage medium. The computer-readable signal medium may send, propagate, or transmit a program for use by or in combination with an instruction execution system, apparatus, or device. The program codes contained on the computer-readable medium may be transmitted by any suitable medium, including, but not limited to, an electric wire, an optical cable, a radio frequency (RF), or any suitable combination thereof.

In some implementations, any currently known or future developed network protocol such as hypertext transfer protocol (HTTP) may be used for communication, and may be interconnected with digital data communication (for example, a communication network) in any form or medium. Examples of the communication network include a local area network ("LAN"), a wide area network ("WAN"), an internet (for example, the Internet), and an end-to-end network (for example, an ad hoc end-to-end network), as well as any currently known or future developed network.

The above computer-readable medium may be included in the above electronic device; or may also exist alone without being assembled into the electronic device.

The above computer-readable medium carries one or more programs, and when the above one or more programs are executed by the electronic device, the electronic device is caused to: obtain a talking video of a target object and a target text for video generation; and generate, by using the talking video, the target text, and a video generation model, a target video of a digital human corresponding to the target object talking according to the target text, where the video generation model is configured to generate the target video by the following: extracting an initial image sequence from the talking video, and down-sampling images in the initial image sequence to obtain a target image sequence, where each of the images in the initial image sequence includes a face of the target object; generating a video frame sequence corresponding to a video of the digital human corresponding to the target object talking according to the target text, according to the target image sequence and an audio sequence corresponding to the target text; and up-sampling video frames in the video frame sequence to obtain the target video.

The computer program codes for performing the operations of the present disclosure may be written in one or more programming languages or a combination thereof. The above programming languages include, but are not limited to, object-oriented programming languages, such as Java, Smalltalk, C++, and also include conventional procedural programming languages, such as the "C" language or similar programming languages. The program code may be executed entirely on a computer of a user, partly on a computer of a user, as a stand-alone software package, partly on a computer of a user and partly on a remote computer, or entirely on a remote computer or server. In the case of involving a remote computer, the remote computer may be connected to the computer of the user through any kind of network, including a local area network (LAN) or a wide area network (WAN), or may be connected to an external computer (for example, via the Internet through an Internet service provider).

The flowcharts and block diagrams in the drawings illustrate the architecture, functions and operations of possible implementations of systems, methods and computer program products according to various embodiments of the present disclosure. In this regard, each block in the flowchart or block diagram may represent a module, a program segment, or part of codes, and the module, the program segment, or the part of codes contains one or more executable instructions for implementing the specified logical functions. It should also be noted that, in some alternative implementations, the functions marked in the blocks may also occur in a different order than those marked in the drawings. For example, two blocks shown in succession may actually be executed substantially in parallel, and they may sometimes be executed in the reverse order, depending on the functions involved. It should also be noted that each block in the block diagram and/or flowchart, and a combination of blocks in the block diagram and/or flowchart, may be implemented by a dedicated hardware-based system that performs specified functions or operations, or may be implemented by a combination of dedicated hardware and computer instructions.

The modules involved in the embodiments described in the present disclosure may be implemented in software or hardware. The name of a module does not constitute a limitation on the module itself in some cases.

The functions described herein above may be performed, at least in part, by one or more hardware logic components. For example, without limitation, exemplary types of hardware logic components that can be used include: a field programmable gate array (FPGA), an application specific integrated circuit (ASIC), an application specific standard product (ASSP), a system on chip (SOC), a complex programmable logic device (CPLD), etc.

In the context of the present disclosure, a machine-readable medium may be a tangible medium that may contain or store a program for use by or in combination with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the foregoing. More specific examples of the machine-readable storage medium may include an electrical connection based on one or more wires, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the foregoing.

The above description is only preferred embodiments of the present disclosure and an illustration of the applied technical principles. Those skilled in the art should understand that the disclosure scope involved in the present disclosure is not limited to the technical solutions formed by the specific combination of the above technical features, and should also cover other technical solutions formed by any combination of the above technical features or their equivalent features without departing from the above disclosure concept. For example, a technical solution formed by replacing the above features with the technical features having similar functions disclosed in the present disclosure (but not limited to).

In addition, although operations are described in a specific order, this should not be understood as requiring these operations to be performed in the specific order shown or in a sequential order. Under certain circumstances, multitasking and parallel processing may be advantageous. Similarly, although several specific implementation details are included in the above discussion, these should not be interpreted as limiting the scope of the present disclosure. Certain features that are described in the context of separate embodiments can also be implemented in combination in a single embodiment. Conversely, various features described in the context of a single embodiment can also be implemented in multiple embodiments individually or in any suitable sub-combination.

Although the subject matter has been described in language specific to structural features and/or logical actions of the method, it should be understood that the subject matter defined in the appended claims is not necessarily limited to the specific features or actions described above. On the contrary, the specific features and actions described above are only exemplary forms for implementing the claims. For the apparatus in the above embodiment, the specific manner in which each module performs the operation has been described in detail in the method embodiments, and will not be elaborated here.

**Claims**

1. A video generation method, comprising:

   obtaining a talking video of a target object and a target text for video generation(S101); and
   generating, by using the talking video, the target text, and a video generation model, a target video of a digital human corresponding to the target object talking according to the target text(S102),
   wherein the video generation model is configured to generate the target video by following operations:

   extracting an initial image sequence from the talking video, and down-sampling images in the initial image sequence to obtain a target image sequence, wherein each of the images in the initial image sequence comprises a face of the target object;
   generating a video frame sequence corresponding to a video of the digital human corresponding to the target object talking according to the target text, according to the target image sequence and an audio sequence corresponding to the target text; and
   up-sampling video frames in the video frame sequence to obtain the target video.

2. The video generation method according to claim 1, wherein the images in the initial image sequence have a first resolution, and the down-sampling the images in the initial image sequence to obtain the target image sequence comprises:

   down-sampling the images in the initial image sequence to obtain the target image sequence having a second resolution, wherein the first resolution is higher than the second resolution; and
   the up-sampling the video frames in the video frame sequence to obtain the target video comprises:
   up-sampling the video frames in the video frame sequence to obtain the target video having the first resolution.

3. The video generation method according to claim 1, wherein the generating the video frame sequence corresponding to the video of the digital human corresponding to the target object talking according to the target text, according to the target image sequence and the audio sequence corresponding to the target text comprises:

   for each image in the target image sequence, determining a previous image of the image and a next image of the image in the target image sequence, and performing feature fusion on the image, the previous image, and the next image to obtain an image fusion feature; and
   generating the video frame sequence corresponding to the video of the digital human corresponding to the target object talking according to the target text, according to image fusion features of all images in the target image sequence and the audio sequence corresponding to the target text.

4. The video generation method according to claim 3, wherein the image fusion feature comprises a first fusion feature corresponding to the image, a second fusion feature corresponding to the previous image, and a third fusion feature corresponding to the next image; and
the generating the video frame sequence corresponding to the video of the digital human corresponding to the target object talking according to the target text, according to the image fusion features of all the images in the target image sequence and the audio sequence corresponding to the target text comprises:

> for the image fusion feature of each image in the target image sequence, according to the image fusion feature and the audio sequence, generating a first video frame corresponding to the first fusion feature, a second video frame corresponding to the second fusion feature, and a third video frame corresponding to the third fusion feature; and
> obtaining the video frame sequence according to first video frames of all the images in the target image sequence.

5. The video generation method according to any one of claims 1 to 4, wherein the video generation model comprises an audio encoding module, an image encoding module, and a decoding module, the image encoding module comprises a down-sampling layer and an image encoding unit, the decoding module comprises a decoding unit and an up-sampling layer, and the video generation model is configured to generate the target video by following operations:

> extracting the initial image sequence from the talking video, and down-sampling the images in the initial image sequence by using the down-sampling layer to obtain the target image sequence;
> performing feature encoding on the target image sequence by using the image encoding unit to obtain an image feature, and performing feature encoding on the audio sequence by using the audio encoding module to obtain an audio feature;
> inputting the image feature and the audio feature into the decoding unit to generate the video frame sequence corresponding to the video of the digital human corresponding to the target object talking according to the target text; and
> up-sampling the video frames in the video frame sequence by using the up-sampling layer to obtain the target video.

6. The video generation method according to any one of claims 1 to 4, wherein the video generation model is trained by following operations:

> obtaining a sample talking video of a target sample object, and extracting a sample audio sequence and a sample image sequence from the sample talking video, wherein images in the sample image sequence have a second resolution;
> processing a resolution of the images in the sample image sequence to a first resolution to obtain a first sample image sequence, and processing the first sample image sequence by using a super-resolution model to obtain a second sample image sequence, wherein the first resolution is higher than the second resolution; and
> performing model training on the video generation model according to the sample audio sequence and the second sample image sequence to obtain a trained video generation model.

7. The video generation method according to claim 6, wherein the performing model training on the video generation model according to the sample audio sequence and the second sample image sequence to obtain the trained video generation model comprises:

> for each sample image in the second sample image sequence, determining a previous sample image of the sample image and a next sample image of the sample image in the second sample image sequence;
> obtaining, by using the sample audio sequence, the sample image, the previous sample image, the next sample image, and the video generation model, a target sample image corresponding to the sample image, a previous target sample image corresponding to the previous sample image, and a next target sample image corresponding to the next sample image;
> determining an image jitter loss according to the target sample image, the previous target sample image, and the next target sample image; and
> adjusting a model parameter of the video generation model at least based on at least the image jitter loss to obtain the trained video generation model.

8. The video generation method according to any one of claims 1 to 4, wherein the obtaining the target text for video generation comprises:

obtaining a live streaming content text for live streaming video generation; and

the generating, by using the talking video, the target text, and the video generation model, the target video of the digital human corresponding to the target object talking according to the target text comprises:

generating, by using the talking video, the live streaming content text, and the video generation model, a target live streaming video of the digital human corresponding to the target object talking according to the live streaming content text.

9. A video generation apparatus, comprising:

an obtaining module (401), configured to obtain a talking video of a target object and a target text for video generation; and

a generation module (402), configured to generate, by using the talking video, the target text, and a video generation model, a target video of a digital human corresponding to the target object talking according to the target text, wherein the video generation model is configured to generate the target video by the following:

extracting an initial image sequence from the talking video, and down-sampling images in the initial image sequence to obtain a target image sequence, wherein each of the images in the initial image sequence comprises a face of the target object;

generating a video frame sequence corresponding to a video of the digital human corresponding to the target object talking according to the target text, according to the target image sequence and an audio sequence corresponding to the target text; and

up-sampling video frames in the video frame sequence to obtain the target video.

10. The video generation apparatus according to claim 9, wherein the generation module (402) is further configured to:

down-sample the images in the initial image sequence to obtain the target image sequence having a second resolution, wherein the first resolution is higher than the second resolution; and

the up-sampling the video frames in the video frame sequence to obtain the target video comprises:

up-sample the video frames in the video frame sequence to obtain the target video having the first resolution.

11. The video generation apparatus according to claim 9, wherein the generation module (402) comprises:

a fusion module, configured to, for each image in the target image sequence, determine a previous image of the image and a next image of the image in the target image sequence, and perform feature fusion on the image, the previous image, and the next image to obtain an image fusion feature; and

a generation sub-module, configured to generate the video frame sequence corresponding to the video of the digital human corresponding to the target object talking according to the target text, according to image fusion features of all images in the target image sequence and the audio sequence corresponding to the target text.

12. The video generation apparatus according to claim 11, wherein the image fusion feature comprises a first fusion feature corresponding to the image, a second fusion feature corresponding to the previous image, and a third fusion feature corresponding to the next image; and the generation sub-module is configured to:

for the image fusion feature of each image in the target image sequence, according to the image fusion feature and the audio sequence, generate a first video frame corresponding to the first fusion feature, a second video frame corresponding to the second fusion feature, and a third video frame corresponding to the third fusion feature; and

obtain the video frame sequence according to first video frames of all the images in the target image sequence.

13. The video generation apparatus according to any one of claims 9 to 12, wherein the video generation model comprises an audio encoding module, an image encoding module, and a decoding module, the image encoding module comprises a down-sampling layer and an image encoding unit, the decoding module comprises a decoding unit and an up-sampling layer, and the generation module (402) is configured to:

extract the initial image sequence from the talking video, and down-sample the images in the initial image sequence by using the down-sampling layer to obtain the target image sequence;

perform feature encoding on the target image sequence by using the image encoding unit to obtain an image feature, and perform feature encoding on the audio sequence by using the audio encoding module to obtain an audio feature;

input the image feature and the audio feature into the decoding unit to generate the video frame sequence corresponding to the video of the digital human corresponding to the target object talking according to the target text; and

up-sample the video frames in the video frame sequence by using the up-sampling layer to obtain the target video.

14. A computer-readable medium having a computer program stored thereon, wherein when the program is executed by a processing apparatus, the steps of the method according to any one of claims 1 to 8 are implemented.

15. An electronic device, comprising:

a storage apparatus (508) having a computer program stored thereon; and

a processing apparatus (501) configured to execute the computer program in the storage apparatus, to implement the steps of the method according to any one of claims 1 to 8.

```
┌─────────────────────────────────────────────────┐
│  Obtain a talking video of a target object and a │ ⟩ S101
│  target text for video generation                │
└─────────────────────────────────────────────────┘
                        │
                        ▼
┌─────────────────────────────────────────────────┐
│  Generate, by using the talking video, the       │ ⟩ S102
│  target text, and a video generation model, a    │
│  target video of a digital human corresponding   │
│  to the target object talking according to the   │
│  target text                                     │
└─────────────────────────────────────────────────┘
```

FIG. 1

FIG. 2

96×96
**Second resolution**

256×256
**Second resolution**

256×256
**First resolution**

FIG. 3

400

Video generation apparatus

401

Obtaining module

402

Generation module

FIG. 4

500

Processing apparatus 501

ROM 502

RAM 503

504

I/O interface 505

Input apparatus 506

Output apparatus 507

Storage apparatus 508

Communication apparatus 509

FIG. 5

Europäisches
Patentamt
European
Patent Office
Office européen
des brevets

# EUROPEAN SEARCH REPORT

**Application Number**

EP 25 16 4697

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PRAJWAL K R ET AL: "A Lip Sync Expert Is All You Need for Speech to Lip Generation In The Wild", ARXIV.ORG, CORNELL UNIVERSITY LIBRARY, 201 OLIN LIBRARY CORNELL UNIVERSITY ITHACA, NY 14853, 23 August 2020 (2020-08-23), XP081746748, DOI: 10.1145/3394171.3413532 | 1,2, 5-10, 13-15 | INV. G11B27/036 |
| Y | * pages 4,7,8; figures 1,2 * | 3,4,11, 12 | |
| Y | US 2023/177646 A1 (LI SONGJIANG [CN] ET AL) 8 June 2023 (2023-06-08) * paragraph [0119] * | 3,4,11, 12 | |
| A | PRAJWAL K R ET AL: "Towards Automatic Face-to-Face Translation", ARXIV.ORG, CORNELL UNIVERSITY LIBRARY, 201 OLIN LIBRARY CORNELL UNIVERSITY ITHACA, NY 14853, 1 March 2020 (2020-03-01), XP081611890, DOI: 10.1145/3343031.3351066 * page 5 * | 1 | |

**TECHNICAL FIELDS SEARCHED (IPC)**

H04N
G06N
G11B

The present search report has been drawn up for all claims

| Place of search | Date of completion of the search | Examiner |
|---|---|---|
| The Hague | 2 July 2025 | Mourik, Piet |

EPO FORM 1503 03.82 (P04C01)

## ANNEX TO THE EUROPEAN SEARCH REPORT
## ON EUROPEAN PATENT APPLICATION NO.

EP 25 16 4697

This annex lists the patent family members relating to the patent documents cited in the above-mentioned European search report.
The members are as contained in the European Patent Office EDP file on
The European Patent Office is in no way liable for these particulars which are merely given for the purpose of information.

02-07-2025

| Patent document cited in search report | Publication date | Patent family member(s) | | Publication date |
|---|---|---|---|---|
| US 2023177646 A1 | 08-06-2023 | CN | 112070664 A | 11-12-2020 |
| | | EP | 4181052 A1 | 17-05-2023 |
| | | US | 2023177646 A1 | 08-06-2023 |
| | | WO | 2022022288 A1 | 03-02-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410316872